# EUROPEAN PATENT SPECIFICATION

(11) **EP 1 143 190 B1**
(45) Date of publication and mention of the grant of the patent: **27.06.2007**
(21) Application number: 01300058.3
(22) Date of filing: 04.01.2001
(51) Int. Cl.: F17C 9/00, F17C 7/02

(54) **Method and apparatus for producing a pressurised high purity liquid carbon dioxide stream**
Verfahren und Vorrichtung zur Herstellung eines flüssigen Druckstromes von hochreinem Kohlendioxid
Méthode et dispositif pour produire un courant sous pression de dioxyde de carbone liquide à haute pureté

(30) Priority: 05.01.2000 US 174531 P
(43) Date of publication of application: 10.10.2001
(73) Proprietor: THE BOC GROUP, INC., New Providence, NJ 07974-2082 (US)
(72) Inventor: Boyd, Robert Walter, Orinda, California 94563 (US); Pike, Jessi Lynn, Vancouver, Washington 98661 (US); Cheng, David C., Fremont, California 94536 (US); Leitch, Kelly, Nampa, Idaho 83687 (US)
(74) Representative: Wickham, Michael

(56) References cited:
- EP-A- 0 416 630
- EP-A- 0 911 572
- EP-A- 0 922 901
- FR-A- 2 774 006
- US-A- 4 751 822
- US-A- 5 392 608

## Description

The present invention relates to a method and apparatus for producing a purified and pressurized liquid carbon dioxide stream in which a feed stream composed of carbon dioxide vapor is condensed into a liquid that is subsequently pressurized by being heated within a chamber. Such a method and apparatus is known from EP-A-911 572.

Highly pressurized, purified liquid carbon dioxide is required for a variety of industrial processes. Such highly pressurized liquid is produced by purifying industrial grade liquid carbon dioxide that is available at about 13 to 23 bar and then pumping the liquid to a pressure of anywhere from between about 20 and about 68 bar.

The problem with pumping, however, is that impurities such as particulates or hydrocarbons can be introduced into the product stream as a byproduct of mechanical pump operation. As will be discussed, this problem is overcome in the present invention.

The present invention provides a method of producing a pressurized liquid carbon dioxide stream in which a feed stream composed of carbon dioxide vapor is introduced into a purifying filter. The purified feed stream is condensed within a condenser having a sump and an intermediate liquid stream is introduced from the condenser sump into first and second pressure accumulation chambers. The first and second pressure accumulation chambers are heated to pressurize liquid contained therein and the pressurized liquid carbon dioxide stream is delivered from the first and second pressure accumulation chambers.

The intermediate liquid stream is alternately introduced into the first and second pressure accumulation chambers and the pressurized liquid carbon dioxide stream is alternately delivered from the first and second pressure accumulation chambers such that prior to one of the first and second pressure accumulation chambers becoming empty, the intermediate liquid stream is introduced into the other of the first and second pressure accumulation chambers. This ensures continual delivery of the pressurized liquid carbon dioxide stream. Each of the first and second pressure accumulation chambers is vented to the sump of the condenser prior to introduction of the intermediate liquid stream therein.

Preferably, each of the first and second pressure accumulation chambers is electrically heated. Additionally, the feed stream is preferably condensed within the condenser through indirect heat exchange with a refrigerant stream. The pressurized liquid carbon dioxide stream can be further treated through its introduction into a particle filter.

In another aspect, the present invention provides an apparatus for producing a pressurized liquid carbon dioxide stream. In such aspect, a purifying filter is provided for purifying a feed stream composed of carbon dioxide vapor and a condenser having a sump is used for condensing the feed stream. First and second pressure accumulation chambers are associated with heaters for heating the first and second pressure accumulation chambers, thereby to pressurize liquid contained therein.

A flow network, associated with the pressure accumulation chambers, has conduits connecting the sump of the condenser to the first and second pressure accumulation chambers for discharging the pressurized liquid carbon dioxide stream therefrom. The flow network has valves associated with the conduits to allow for an intermediate liquid stream to be alternately introduced from the sump of the condenser into the first and second pressure accumulation chambers and the pressurized liquid carbon dioxide stream to be alternately delivered from the first and second pressure accumulation chambers such that prior to one of the first and second pressure accumulation chambers becoming empty, the intermediate liquid stream is introduced into the other of the first and second pressure accumulation chambers. This acts to ensure continual delivery of the pressurized liquid carbon dioxide. The conduits additionally include a vent line from the first and second pressure accumulation chambers to the condenser to allow each of the first and second pressure accumulation chambers to be vented prior to introduction of the intermediate liquid stream therein.

Preferably, the heaters comprise electrical heaters and the condenser includes an external refrigeration circuit having a heat exchanger to condense the feed stream through indirect heat exchange with a refrigerant stream. The apparatus can further comprise a particle filter connected to the flow network to filter the pressurized liquid carbon dioxide stream.

As may be appreciated from the above discussion, since heaters are used to pressurize the liquid, the liquid never contacts a mechanical pump component that could introduce impurities into the pressurized liquid carbon dioxide. Furthermore, since a pump is not used, maintenance requirements for an apparatus in accordance with the present invention are reduced over prior art devices.

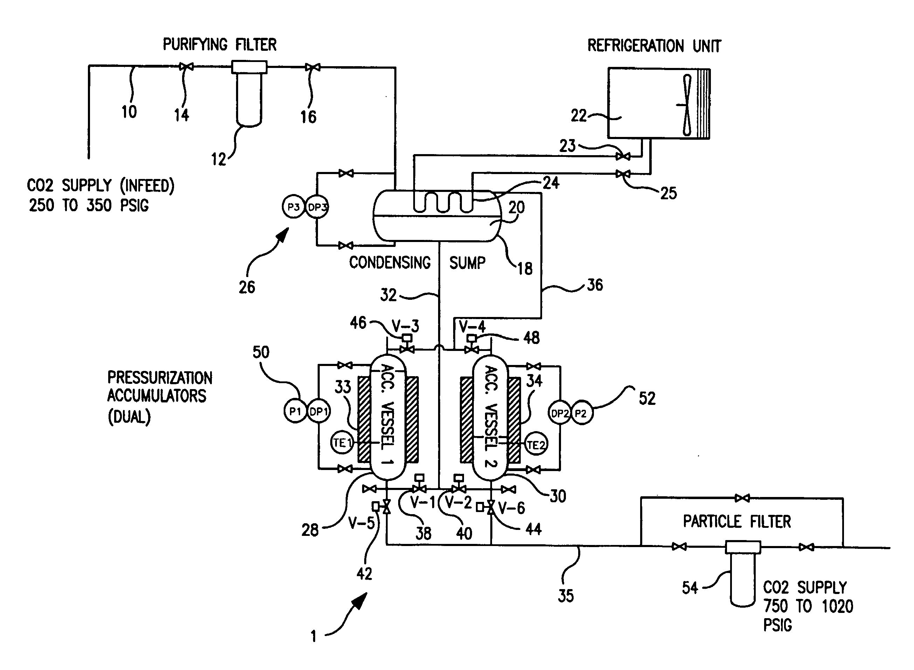

The invention will now be described by way of example with reference to the sole figure which is a schematic view of an apparatus for carrying out a method in accordance with the present invention.

With reference to the Figure, an apparatus 1 in accordance with the present invention is illustrated. A feed stream 10 composed of carbon dioxide vapor is introduced into a purifying filter 12 which can be any of a number of known, available coalescing and/or selective adsorbent filters for removing particulate contaminants from the vapour. Valves 14 and 16 are provided to isolate purifying filter(s) 12.

The feed stream after having been purified is introduced into a condenser 18 which is provided with a sump to condense the vapor into a liquid 20. Such condensation is effectuated by an external refrigeration unit 22 that circulates a refrigeration stream through a heat exchanger 24, preferably of shell and tube design. In this regard, the condenser 18 can consist of a heat exchanger feeding a separate sump. Isolation valves 26 and 28 can be provided to isolate refrigeration unit 22. The level of liquid is controlled by a differential pressure transducer 26 that senses the pressure differential between the liquid and vapor within condenser 18. Although not illustrated, a controller in the form of a programmable logic computer receives signals from differential pressure transducer 26 to activate refrigeration unit 22 when the liquid 20 drops below a predetermined level.

As may be appreciated, since vapor is being condensed within condenser 18, a separation of any impurities present within the vapor is able to be effected by which the more volatile impurities (for example methane) remain in uncondensed vapor from and less volatile impurities are condensed into the liquid. Although not illustrated, sample lines can be connected to condenser 18 for sampling and drawing off liquid and vapor as necessary to lower impurity concentration within condenser 18.

An intermediate liquid stream composed of high purity liquid 20 is introduced into first and second pressure accumulation chambers 28 and 30. First and second pressure accumulation chambers 28 and 30 are preferably heated by way of electrical heaters 33 and 34, respectively, to pressurize the liquid to a delivery pressure of the pressurized liquid carbon dioxide stream to be produced by apparatus 1.

Liquid flow to and from first and second pressure accumulation chambers 28 and 30 by way of a flow network having an inlet conduit 32 to supply the intermediate liquid stream to pressure accumulation chambers 28 and 30. The pressurized liquid carbon dioxide stream is delivered from first and second pressure accumulation chambers 28 and 30 through an outlet conduit 35. Further, each of the first and second pressure accumulation chambers 28 and 30 is vented through a vent line 36 to condenser 18.

A valve network controls the flow within the flow network. In this regard, control valves 38 and 40 control the flow of the intermediate liquid stream from condenser 18 to first and second pressure accumulation chambers 28 and 30. The flow through outlet conduit 35 is controlled by control valves 42 and 44. The venting of first and second pressure accumulation chambers 28 and 30 is controlled by control valves 46 and 48.

When second pressure accumulation chamber 30 is nearly empty, control valve 42 opens and control valve 44 closes to dispense pressurized liquid carbon dioxide from first pressure accumulation chamber 28. At the same time, since second pressure accumulation chamber 30 has been pressurized through electrical heater 34, control valve 48 opens to allow for venting of such pressure to condenser 20. This allows second pressure accumulation chamber 30 to receive more liquid by introduction of the intermediate liquid stream, through inlet conduit 32, into second pressure accumulation chamber 30. To this end, control valve 40 is set in an open position. When differential pressure sensor 52 indicates that second pressure accumulation chamber 30 is full, control valves 40 and 48 close and the liquid within second pressure accumulation chamber 30 is heated by electrical heater 34 to pressurize the liquid.

When first pressure accumulation chamber 28 is nearly empty, as sensed by differential pressure sensor 50, control valve 42 closes and control valve 44 opens to allow the pressurized liquid carbon dioxide stream to be dispensed from second pressure accumulation chamber 30. At the same time, control valve 46 opens to vent first pressure accumulation chamber 26 valve. Control valve 38 opens to allow intermediate liquid stream to fill first pressure accumulation chamber 28. When differential pressure sensor indicates the completion of the filling, control valves 38 and 46 close and the liquid is heated by electrical heater 32 to pressurize the liquid within first pressure accumulation chamber 28.

The aforementioned valves function in accordance with a cycle so that the pressurized liquid carbon dioxide is continuously dispensed. This cycle is preferably controlled by a programmable logic controller, not shown, that is connected to differential pressure transducers 50 and 52. Differential pressure transducers 50 and 52 generate signals that are referable to liquid level within first and second pressure accumulation chambers 28 and 30 and in response to such signals, the controller remotely and automatically operates the foregoing control valves. There is also a differential pressure transducer sensing the level of liquid in the condenser 18 and the controller stops the condensation process by turning off refrigeration unit 22 before the condenser vessel is full allowing room for the carbon dioxide to be vented from accumulation chambers 28 and 30 during the filling cycle.

Preferably, outlet conduit 35 is connected to a particle filter 54 to remove any particulate contamination within such liquid.

## Claims

1. A method of producing a pressurized liquid carbon dioxide stream comprising :
introducing a feed stream (10) composed of carbon dioxide vapor into a purifying filter (12);
condensing the resulting purified feed stream within a condenser (18) having a sump;
Introducing an intermediate liquid stream (20) from said sump into first and second pressure accumulation chambers (28, 30);
heating (33, 34) said first and second pressure accumulation chambers (28, 30) to pressurize liquid contained therein to a delivery pressure;
delivering said pressurized liquid carbon dioxide stream from said first and second pressure accumulation chambers (28, 30);
the intermediate liquid stream being alternately introduced into said first and second pressure accumulation chambers (28, 30) and said pressurized liquid carbon dioxide stream being alternately delivered from said first and second pressure accumulation chambers (28, 30) such that prior to one of said first and second pressure accumulation chambers (28, 30) becoming empty, the intermediate liquid stream is introduced into the other of said first and second pressure accumulation chamber (28, 30) to ensure continual delivery of said pressurized liquid carbon dioxide stream; and
venting each of said first and second pressure accumulation chambers (28, 30) to said condenser (18) prior to introduction of said intermediate liquid stream therein.

2. A method according to claim 1, wherein each of said first and second pressure accumulation chambers (28, 30) is electrically heated.

3. A method according to claim 1 or claim 2, wherein said feed stream is condensed within said condenser (18) through indirect heat exchange with a refrigerant stream.

4. A method according to any one of the preceding claims, further comprising introducing said pressurized liquid carbon dioxide stream into a particle filter.

5. An apparatus for producing a pressurized liquid carbon dioxide stream comprising:
a purifying filter (12) for purifying a feed stream composed of carbon dioxide vapor;
a condenser (18) for condensing said feed stream having a sump;
first and second pressure accumulation chambers (28, 30)
heaters (33, 34) for heating said first and second pressure accumulation chambers (28, 30) and thereby pressurizing liquid contained therein to a delivery pressure; and
a flow network having conduits connecting said condenser (18) to said first and second pressure accumulation vessels (28, 30) and for discharging said pressurized liquid carbon dioxide stream therefrom;
said flow network having valves (38, 40, 46, 48) associated with said conduits to allow for an intermediate liquid stream to be alternately introduced from said condenser (18) into said first and second pressure accumulation chambers (28, 30) and said pressurized liquid carbon dioxide stream to be alternately delivered from said first and second pressure accumulation (28, 30) chambers such that prior to one of said first and second pressure accumulation chambers (28, 30) becoming empty, the intermediate liquid stream is introduced into the other of said first and second pressure accumulation chambers (28, 30), thereby to ensure continual delivery of said pressurized liquid carbon dioxide;
the conduits of said flow network including a vent (36) line from said first and second pressure accumulation chambers (28, 30) to said condenser (18) to allow each of said first and second pressure accumulation chambers (28, 30) to be vented prior to introduction of said intermediate liquid stream therein.

6. An apparatus according claim 5, wherein said heaters (33, 34) comprise electrical heaters.

7. An apparatus according to claim 5 or claim 6, wherein said condenser (18) includes an external refrigeration circuit (22) having a heat exchanger (24) to condense said feed stream through indirect heat exchange with a refrigerant stream.

8. An apparatus according to any one of claims 5 to 7, further comprising a particle filter connected to said flow network to filter said pressurized liquid carbon dioxide stream.

## Patentansprüche

1. Verfahren zum Erzeugen eines druckbeaufschlagten Flüssigkohlendioxidstroms, das umfasst:
Einleiten eines Speisestroms (10), der aus Kohlendioxiddampf zusammengesetzt ist, in einen Reinigungsfilter (12),
Kondensieren des resultierenden gereinigten Speisestroms in einem Kondensator (18) mit einem Sumpf,
Einleiten eines flüssigen Zwischenstroms (20) aus dem Sumpf in eine erste und eine zweite Drucksammelkammer (28, 30),
Erwärmen (33, 34) der ersten und der zweiten Drucksammelkammer (28, 30) zum Druckbeaufschlagen der darin enthaltenen Flüssigkeit auf einen Abgabedruck,
Abgeben des druckbeaufschlagten Flüssigkohlendioxidstroms aus der ersten und der zweiten Drucksammelkammer (28, 30),
wobei der flüssige Zwischenstrom abwechselnd in die erste und die zweite Drucksammelkammer (28, 30) eingeleitet wird und der druckbeaufschlagte Flüssigkohlendioxidstrom abwechselnd aus der ersten und der zweiten Drucksammelkammer (28, 30) abgegeben wird, derart, dass der flüssige Zwischenstrom, bevor eine der beiden Drucksammelkammern (28, 30) leer wird, in die jeweils andere der ersten und der zweiten Drucksammelkammer (28, 30) eingeleitet wird, um eine kontinuierliche Abgabe des druckbeaufschlagen Flüssigkohlendioxidstroms sicherzustellen, und
Entlüften jeder der ersten und der zweiten Drucksammelkammer (28, 30) in den Kondensator (18) vor dem Einleiten des flüssigen Zwischenstroms.

2. Verfahren nach Anspruch 1, wobei die erste und die zweite Drucksammelkammer (28, 30) jeweils elektrisch beheizt wird.

3. Verfahren nach Anspruch 1 oder Anspruch 2, wobei der Speisestrom in dem Kondensator (18) durch indirekten Wärmeaustausch mit einem Kältemittelstrom kondensiert wird.

4. Verfahren nach einem der vorhergehenden Ansprüche, das weiter das Einleiten des druckbeaufschlagten Flüssigkohlendioxidstroms in einen Teilchenfilter umfasst.

5. Gerät zum Erzeugen eines druckbeaufschlagten Flüssigkohlendioxidstroms, mit:
einem Reinigungsfilter (12) zum Reinigen eines aus Kohlendioxiddampf zusammengesetzten Spreisestroms,
einem Kondensator (18), der einen Sumpf aufweist, zum Kondensieren des Speisestroms,
einer ersten und einer zweiten Drucksammelkammer (28, 30),
Heizgeräten (33, 34) zum Erwärmen der ersten und der zweiten Drucksammelkammer (28, 30) und dadurch zum Druckbeaufschlagen darin enthaltener Flüssigkeit auf einen Abgabedruck und
einem Strömungsnetzwerk mit Leitungen, welche den Kondensator (18) mit dem ersten und dem zweiten Drucksammelbehälter (28, 30) verbinden, und zum Abgeben des druckbeaufschlagten Flüssigkohlendioxidstroms daraus,
wobei das Strömungsnetzwerk den genannten Leitungen zugeordnete Ventile (38, 40, 46, 48) aufweist, damit ein flüssiger Zwischenstrom abwechselnd aus dem Kondensator (18) in die erste und die zweite Drucksammelkammer (28, 30) eingeleitet werden kann und der druckbeaufschlagte Flüssigkohlendioxidstrom abwechselnd aus der ersten und der zweiten Drucksammelkammer (28, 30) abgegeben werden kann, so dass, bevor die erste oder zweite Drucksammelkammer (28, 30) leer wird, der flüssige Zwischenstrom in die jeweils andere der ersten und zweiten Drucksammelkammer (28, 30) eingeleitet wird, wodurch die kontinuierliche Abgabe des druckbeaufschlagten Flüssigkohlendioxids sichergestellt wird,
wobei die Leitungen des Strömungsnetzwerks eine Entlüfteleitung (36) aus der ersten und der zweiten Drucksammelkammer (28, 30) in den Kondensator (18) enthalten, damit die erste und die zweite Drucksammelkammer (28, 30) jeweils vor dem Einleiten des flüssigen Zwischenstroms in diese entlüftet werden kann.

6. Gerät nach Anspruch 5, wobei die Heizgeräte (33, 34) elektrische Heizgeräte sind.

7. Einrichtung nach Anspruch 5 oder Anspruch 6, wobei der Kondensator (18) einen externen Kühlkreislauf (22) mit einem Wärmetauscher (24) zum Kondensieren des Speisestroms durch indirekten Wärmeaustausch mit einem Kältemittelstrom aufweist.

8. Gerät nach einem der Ansprüche 5 bis 7, das weiter einen Teilchenfilter aufweist, der mit dem Strömungsnetzwerk verbunden ist, um den druckbeaufschlagten Flüssigkohlendioxidstrom zu filtern.

## Revendications

1. Procédé de production d'un courant de dioxyde de carbone liquide sous pression, comprenant :
l'introduction d'un courant (10) d'alimentation composé de vapeur de dioxyde de carbone dans un filtre épurateur (12) ;
la condensation du courant d'alimentation épuré résultant dans un condenseur (18) équipé d'un réservoir collecteur ;
l'introduction d'un courant (20) de liquide intermédiaire provenant dudit réservoir collecteur dans une première et une deuxième chambres (28, 30) d'accumulation de pression ;
le chauffage (33, 34) desdites première et deuxième chambres (28, 30) d'accumulation de pression pour mettre sous pression le liquide qui y est contenu jusqu'à une pression de refoulement ;
le refoulement dudit courant de dioxyde de carbone liquide sous pression desdites première et deuxième chambres (28, 30) d'accumulation de pression ;
le courant de liquide intermédiaire étant alternativement introduit dans lesdites première et deuxième chambres (28, 30) d'accumulation de pression et ledit courant de dioxyde de carbone liquide sous pression étant alternativement refoulé desdites première et deuxième chambres (28, 30) d'accumulation de pression de telle sorte qu'avant que l'une desdites première et deuxième chambres (28, 30) d'accumulation de pression ne devienne vide, le courant de liquide intermédiaire est introduit dans l'autre desdites première et deuxième chambres (28, 30) d'accumulation de pression pour assurer un refoulement continu dudit courant de dioxyde de carbone liquide sous pression ; et
l'évacuation de chacune desdites première et deuxième chambres (28, 30) d'accumulation de pression dans ledit condenseur (18) avant l'introduction dans celui-ci dudit courant de liquide intermédiaire.

2. Procédé selon la revendication 1, dans lequel chacune desdites première et deuxième chambres (28, 30) d'accumulation de pression est chauffée électriquement.

3. Procédé selon la revendication 1 ou la revendication 2, dans lequel ledit courant d'alimentation est condensé dans ledit condenseur (18) par échange indirect de chaleur avec un courant de réfrigérant.

4. Procédé selon l'une quelconque des revendications précédentes, comprenant de plus l'introduction dudit courant de dioxyde de carbone liquide sous pression dans un filtre à particules.

5. Dispositif pour la production d'un courant de dioxyde de carbone liquide sous pression, comprenant :
un filtre épurateur (12) pour épurer un courant d'alimentation composé de vapeur de dioxyde de carbone ;
un condenseur (18) pour condenser ledit courant d'alimentation, équipé d'un réservoir collecteur ;
une première et une deuxième chambres (28, 30) d'accumulation de pression ;
des réchauffeurs (33, 34) pour réchauffer lesdites première et deuxième chambres (28, 30) d'accumulation de pression et ainsi mettre sous pression le liquide qui y est contenu jusqu'à une pression de refoulement ; et
un réseau d'écoulement comportant des conduits reliant ledit condenseur (18) auxdites première et deuxième chambres (28, 30) d'accumulation de pression et pour décharger ledit courant de dioxyde de carbone liquide sous pression de celles-ci ;
ledit réseau d'écoulement comportant des vannes (38, 40, 46, 48) associées auxdits conduits pour permettre à un courant de liquide intermédiaire d'être alternativement introduit dudit condenseur (18) dans lesdites première et deuxième chambres (28, 30) d'accumulation de pression, et audit courant de dioxyde de carbone liquide sous pression d'être alternativement refoulé desdites première et deuxième chambres (28, 30) d'accumulation de pression de telle sorte qu'avant que l'une desdites première et deuxième chambres (28, 30) d'accumulation de pression ne devienne vide, le courant de liquide intermédiaire soit introduit dans l'autre desdites première et deuxième chambres (28, 30) d'accumulation de pression pour assurer ainsi un refoulement continu dudit courant de dioxyde de carbone liquide sous pression ;
les conduits dudit réseau d'écoulement comprenant une canalisation d'évacuation (36) allant desdites première et deuxième chambres (28, 30) d'accumulation de pression jusqu'audit condenseur (18) pour autoriser l'évacuation desdites première et deuxième chambres (28, 30) d'accumulation de pression avant l'introduction dudit courant de liquide intermédiaire dans celles-ci.

6. Dispositif selon la revendication 5, dans lequel lesdits réchauffeurs (33, 34) comprennent des réchauffeurs électriques.

7. Dispositif selon la revendication 5 ou la revendication 6, dans lequel ledit condenseur (18) comprend un circuit (22) de réfrigération externe comportant un échangeur de chaleur (24) pour condenser ledit courant d'alimentation par échange indirect de chaleur avec un courant de réfrigérant.

8. Dispositif selon l'une quelconque des revendications 5 à 7, comprenant de plus un filtre à particules relié audit réseau d'écoulement pour filtrer ledit courant de dioxyde de carbone liquide sous pression.
